# EUROPÄISCHE PATENTSCHRIFT

(11) **EP 0 997 336 B1**
(45) Veröffentlichungstag und Bekanntmachung des Hinweises auf die Patenterteilung: **27.08.2003**
(21) Anmeldenummer: 99121136.8
(22) Anmeldetag: 22.10.1999
(51) Int. Cl.: B60K 15/035, B60K 15/03

(54) **Kraftstoff-Tanksystem für ein Kraftfahrzeug**
Fuel tank system for a motor vehicle
Système de réservoir de carburant liquide pour un véhicule à moteur

(30) Priorität: 29.10.1998 DE 19849820
(43) Veröffentlichungstag der Anmeldung: 03.05.2000
(73) Patentinhaber: Kautex Textron GmbH & Co. KG., 53229 Bonn (DE)
(72) Erfinder: Puempel, Andreas G.R., Ontario N8M 3B8 (CA); Savoni, Louis, Ontario N9J 3B3 (CA); Karsch, Ulrich, 53850 Niederkassel (DE); Runkel Jürgen, 53229 Bonn (DE); Eulitz, Dirk, 53225 Bonn (DE); Esser, Klaus, 53639 Königswinter (DE)
(74) Vertreter: Koepsell, Helmut, Dipl.-Ing.

(56) Entgegenhaltungen:
- EP-A- 0 921 025
- DE-A- 4 304 180
- DE-A- 4 429 875

## Beschreibung

Die Erfindung betrifft ein Kraftstoff-Tanksystem für ein Kraftfahrzeug gemäß dem Oberbegriff des Anspruches 1.

An die Dichtigkeit von Kraftstoff-Tanksystemen in Kraftfahrzeugen werden ständig größer werdende Anforderungen gestellt, um die Menge an gasförmigen Kohlenwasserstoffen, die an die Umgebung, sei es während der Fahrt, sei es während des Stillstands des Kraftfahrzeuges, abgegeben wird, zu reduzieren. Dabei sind in den letzten Jahren erhebliche Fortschritte erzielt worden, indem auch Kraftstofftanks aus thermoplastischem Kunststoff entweder durch entsprechende Behandlung - beispielsweise Fluorieren - oder durch entsprechenden Aufbau der Tankwandung so wenig durchlässig geworden sind, daß die durch Diffundieren durch die Tankwandung in die Umgebung gelangenden Kraftstoffmengen außerordentlich gering sind. Somit wird es bei einer weiteren Verschärfung der Anforderungen an die Dichtigkeit des gesamten Kraftstoff-Tanksystems im wesentlichen darauf ankommen, die Kraftstoffmenge zu verringern, die in gasförmigem Zustand durch Undichtigkeiten z. B. an Verbindungen, Anschlüssen, verschlossenen Öffnungen in der Tankwandung, Hindurchführungen durch die Tankwandung und Verschlüssen und an Ventilen entstehen. Diese Undichtigkeiten treten zwar lediglich in einem Ausmaß auf, in welchem sie technisch nicht vermeidbar sind und wirtschaftlich überhaupt nicht ins Gewicht fallen, so daß sie vernachlässigbar wären, wenn es nicht darum ginge, die Belastung der Umwelt durch Kohlenwasserstoffe in noch stärkerem Maße zu verringern als dies bisher schon geschehen ist. Es handelt sich dabei um Undichtigkeiten an solchen Anschlüssen, Verbindungen usw., die sich nicht im Innenraum des eigentlichen Tanks befinden, da dort auftretende Undichtigkeiten, beispielsweise am Anschluß der Rohrleitung, durch die der Motor des Kraftwagens mit Kraftstoff versorgt wird, an der innerhalb des Tankes befindlichen Kraftstoffpumpe keine negativen Auswirkungen haben können, weil die im Tank befindlichen gasförmigen Kohlenwasserstoffe unter normalen Betriebsbedingungen als Bestandteil eines Gasgemisches durch einen im allgemeinen als Aktivkohlenfilter ausgebildeten Filter geführt und durch das darin befindliche Adsorbens adsorbiert werden.

Eine Möglichkeit, die an die Umgebung abgegebene Menge an Kohlenwasserstoffen zu verringern, wird in der DE 43 04 180 A1 beschrieben. Dort wird die Anzahl an außenliegenden Anschlüssen und Verbindungen dadurch reduziert, daß ein vom Kraftstoffbehälter entfernt angeordneter Kraftstoffdampf-Filter in einem Gehäuse untergebracht ist, das durch eine äußere Vertiefung des Kraftstoffbehälters mit einem lösbaren Deckel gebildet wird. Aber auch hier können zwischen dem Deckel und der Vertiefung unerwünschte Undichtigkeiten auftreten.

Demzufolge liegt der Erfindung die Aufgabe zugrunde, ein Kraftstoff-Tanksystem der einleitend beschriebenen Art so auszubilden, daß auch bei solchen Tanksystemen, bei denen Undichtigkeiten am Tank und außerhalb desselben auftreten können, die pro Zeiteinheit an die Umgebung abgegebene Menge an Kohlenwasserstoffen eine merkliche Verringerung erfährt.

Diese Aufgabe wird durch Anwendung der im Kennzeichen des Anspruches 1 angegebenen Mittel gelöst.

Die Erfindung ist besonders geeignet zur Anwendung bei einstückigen Kunststofftanks, die im allgemeinen im Extrusions-Blasverfahren hergestellt werden. Das Innere dieser Tanks ist aufgrund der Einstückigkeit nicht unbeschränkt zugänglich, so daß es nicht immer möglich ist, solche Teile des Tanksystems, an denen Anschlüsse, Verbindungen, Durchgänge usw. erforderlich sind, in dem Ausmaß im Inneren des Tankes anzuordnen, wie dies bei Tanks auf einfache Weise möglich wäre, die aus mehreren Teilen bestehen, die nachträglich zum fertigen Tank beispielsweise mittels Schweißen, Kleben oder sonst wie zusammengefügt werden. Allerdings sind auch mehrteilige Tanks aus Kunststoffen oder anderen Werkstoffen z. B. mit Anschlüssen, durch geeignete Verschlussmittel, beispielsweise Deckel, dauerhaft verschlossenen Öffnungen usw. versehen, die ebenfalls die vorstehend erläuterten geringfügigen Undichtigkeiten aufweisen, so daß die Anwendung der Lehre gemäß der Erfindung auch bei solchen Tanks eine Verringerung der Kraftstoffmenge, die gasförmig an die Umgebung abgegeben wird, bewirken kann.

Allerdings dürften Kunststofftanks aufgrund der einfachen Formgebung solcher Tanks für die Anwendung der Erfindung besonders vorteilhaft sein, da es beispielsweise ohne zusätzlichen Aufwand möglich ist, an der Tankwandung an einer geeigneten Stelle-ggf. auch an mehreren Stellen - eine Vertiefung oder einen sonstwie, z. B. durch wenigstens einen Vorsprung, begrenzten Bereich anzuformen, der gemeinsam mit der Abdeckung jenen Raum begrenzt, innerhalb dessen solche bezüglich der Abgabe von Kohlenwasserstoffen kritischen Teile und Bereiche angeordnet sein können, die nach außen abgeschirmt sein sollen. Die Anbringung solcher Einziehungen oder Vertiefungen in der Wandung des Tankes muß nicht zwangsläufig zu einer Verringerung des nutzbaren Tankvolumens führen, da aufgrund der bereits erwähnten Formgebungsmöglichkeiten bei Kunststofftanks das Volumen ggf. an einer anderen Stelle durch entsprechenden Verlauf der Tankwandung vergrößert werden kann. Zum anderen ist aber auch zu bedenken, daß die bei anderen Tanks mögliche Anordnung solcher kritischen Verbindungen, Anschlüsse und dgl. im Inneren des Tanks ebenfalls zu einer gewissen Verringerung des nutzbaren Volumens eines solchen Tankes führt, wenn nicht durch eine Volumenvergrößerung an eine anderen Stelle eine Kompensation erfolgt.

Ein besonderer durch die Erfindung erreichbarer Vorteil besteht darin, daß das angestrebte Ergebnis mit einfachen Mitteln, die lediglich einen geringen Aufwand erfordern, erreichbar ist. Es war bereits erwähnt worden, daß bestimmte Erfordernisse bezüglich der Formgebung der Tankwandung insbesondere auch bei Anwendung des Extrusions-Blasverfahrens keinen zusätzlichen Aufwand erfordern. Die für die Abschirmung erforderlichen Abdeckungen können ebenfalls in einfacher Weise aus verhältnismäßig billigen Werkstoffen, beispielsweise Kunststoff hergestellt sein. Das ggf. zu beachtende Erfordernis, daß die Abdeckung für Kohlenwasserstoffe weitgehend diffusionsdicht sein muß, kann auf einfache Weise beispielsweise dadurch erreicht werden, daß eine solche Abdeckung in Form einer Kunststoffplatte oder dgl. mit einer undurchlässigen Folie aus Metall oder aus einem anderen undurchlässigen Material kaschiert ist oder diese Platte mehrschichtig ausgebildet ist, wobei eine Schicht, die für Kohlenwasserstoffe zumindest weitgehend undurchlässig ist, als Barriereschicht wirkt. Die Befestigung der Abdeckung an der Tankwandung erfolgt auf einfache Weise durch Schweißen. Dabei sind die die Tankwandung -und die Abdeckung bildenden Materialien kompatibel. D. h., die Abdeckung besteht aus einem Material, welches mit dem die Tankwandung bildenden Material verschweißbar ist.

In der Zeichnung ist ein Ausführungsbeispiel der Erfindung dargestellt. Es zeigen:
- Fig. 1: in perspektivischer Ansicht das Tanksystem für ein Kraftfahrzeug, wobei die Abdeckung in einem Abstand vom eigentlichen Tank dargestellt ist,
- Fig. 2: einen Schnitt nach der Linie II-II der Fig. 1,
- Fig. 3: eine der Fig. 2 entsprechende Ansicht, jedoch mit am Tank angebrachter Abdeckung,
- Fig. 4: einen Querschnitt durch eine erste Ausführung einer Abdeckung,
- Fig. 5: einen Querschnitt durch eine zweite Ausführung einer Abdeckung.

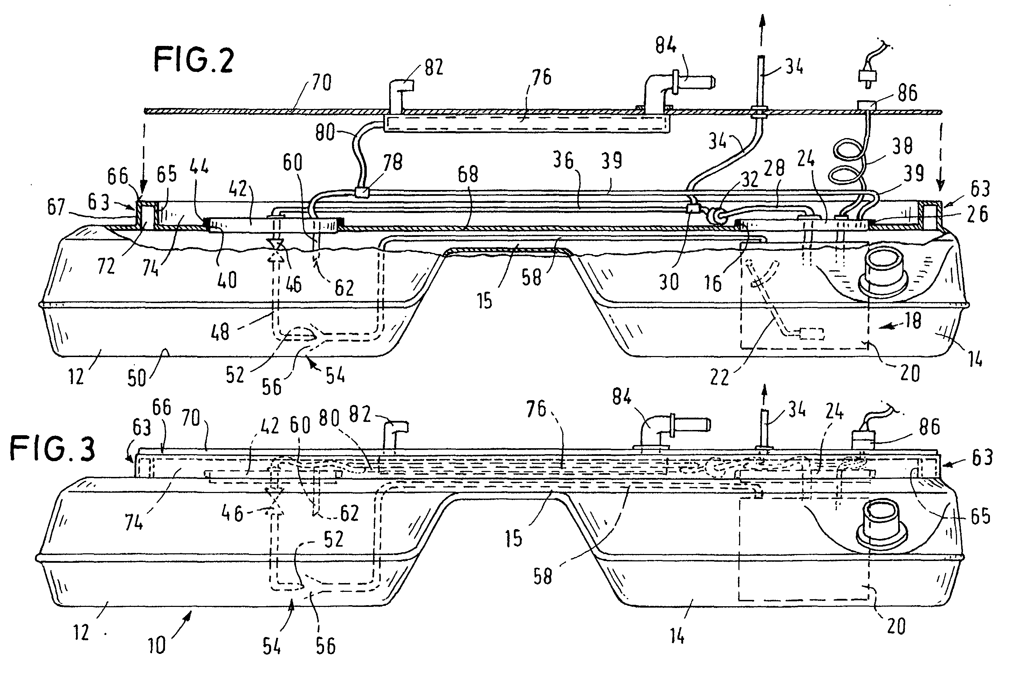

Das in der Zeichnung dargestellte Tanksystem weist einen Tank 10 auf, der als sogenannter Satteltank ausgebildet ist, bei welchem zwei Tankbereiche 12, 14 mit größerem Querschnitt durch einen Bereich 15 miteinander verbunden sind, der einen kleineren Querschnitt aufweist (Fig. 3). Der Tank ist einstückig im Extrusionsblasverfahren aus Kunststoff hergestellt, wenngleich die Lehre gemäß der Erfindung unabhängig von dem Material, aus welchem der Tank hergestellt ist, und unabhängig von dessen konkreter Ausgestaltung und dem Herstellungsverfahren anwendbar ist.

Der in der Zeichnung rechts befindliche Bereich 14 des Tankes 10 ist oberseitig mit einer ggf. nachträglich durch einen Schneidvorgang oder dgl. in der Tankwandung abgebrachten Öffnung 16 versehen, durch die eine vorbereitete Fördereinheit 18 in den Tank 10 eingesetzt werden kann. Diese Fördereinheit 18 weist ein Reservoir 20 für Kraftstoff auf. Innerhalb des Reservoirs ist eine nicht dargestellte Kraftstoffpumpe angeordnet, durch welche der Motor des Kraftfahrzeuges mit Kraftstoff versorgt wird.

Ferner ist die Fördereinheit 18 mit einem Geber 22 versehen, der am Reservoir 20 angebracht ist und die jeweils im Tank 10 vorhandene Kraftstoffmenge anzeigt. Nach dem Einsetzen der Fördereinheit 18 in den Tank und dem noch zu beschreibenden Herstellen einer Leitungsverbindung mit dem Bereich 12 wird die Öffnung 16 durch ein beispielsweise als Deckel 24 ausgebildetes Verschlußmittel verschlossen. Dazu kann die Tankwandung im Bereich der Öffnung 16 mit einem umlaufenden Stutzen oder dgl. 26 versehen sein, an welchem der Deckel 24 unter Verwendung geeigneter Verbindungsmittel, beispielsweise einer Überwurfmutter, angebracht ist. Die Abdichtung zwischen Deckel und Tankwandung bzw. Stutzen 26 wird durch einen Dichtring bewirkt. Bei all diesen Ausgestaltungen und Anordnungen handelt es sich um dem Fachmann geläufige Dinge, die keiner weiteren Erläuterung bedürfen.

Durch den die Öffnung 16 verschließenden Deckel 24 ist die Vorlaufleitung 28 hindurchgeführt, die an ihrem einen Ende innerhalb der Fördereinheit 18 mit der in letzterer befindlichen Benzinpumpe und an ihrem anderen außerhalb des Tanks 10 befindlichen Ende mit einem T-Stück 30 verbunden ist, wobei in der Vorlaufleitung zwischen Ventilpumpe und T-Stück 30 ein ebenfalls außerhalb des Tanks 10 befindlicher Kraftstoff-Filter 32 vorgesehen ist, durch welchen der Kraftstoff zum T-Stück 30 gelangt, an dessen einem Abgang eine Kraftstoffleitung 34 angeschlossen ist, die zum Motor des Kraftwagens führt. Am zweiten Abgang des T-Stückes 30 ist eine Leitung 36 angeschlossen, durch welche der Anteil des von der Pumpe geförderten Kraftstoffes, der vom Motor nicht benötigt wird, in den Tank 10, und zwar in dessen Bereich 12, zurückgeführt wird. Bei normalem Betrieb des Kraftfahrzeuges wird somit von der Pumpe mehr Kraftstoff gefördert als vom Motor benötigt wird.

Durch den die Öffnung 16 verschließenden Deckel 24 ist ferner eine elektrische Leitung 38 hindurchgeführt. Die Leitung 38 enthält mehrere Leiter, von denen beispielsweise einer zur Übertragung der durch den Füllstandsanzeiger 22 bewirkten Signale dient, die in geeigneter Weise beispielsweise in einem Anzeigeinstrument am Armaturenbrett sichtbar gemacht werden. Weitere Leiter der Leitung 38 dienen der Energieversorgung der elektrischen Kraftstoffpumpe in der Fördereinheit 18.

Schließlich ist durch den Deckel 24 noch eine Belüftungsleitung 39 hindurchgeführt, die der Belüftung des Kraftstofftankes während der Entnahme von Kraftstoff dient.

Es ist selbstverständlich, daß sowohl das Verschließen der Öffnung 16 durch den Deckel 24 als auch das Hindurchführen der Vorlaufleitung 28, die Belüftungsleitung 39 und der elektrischen Leitung 38 durch den Deckel 24 hindurch so geschieht, daß der durch den Deckel 24 bewirkte Verschluß und die Hindurchführungen der Leitungen durch den Deckel flüssigkeitsdicht sind. Jedoch sind gewisse minimale Undichtigkeiten unvermeidbar, durch die gasförmige Kohlenwasserstoffe aus dem Tank an die Umgebung gelangen können. Dies gilt auch für Anschlüsse zwischen Vorlaufleitung 28 und Kraftstoff-Filter 32 und die Verbindungen am T-Stück 30, die alle außerhalb des Tanks 10 liegen.

Der in der Zeichnung linke Bereich 12 des Tankes 10 ist ebenfalls in der oberen Tankwandung mit einer Öffnung 40 versehen, durch die für die Montage des Tanksystems das Innere des Tankes 10 zugänglich ist. Diese Öffnung 40 wird durch einen Deckel 42 verschlossen, durch den die vom T-Stück 30 kommende Leitung 36 in das Innere des Bereiches 12 des Tankes 10 flüssigkeitsdicht geführt ist. Auch hier kann, wie im Falle der dem Bereich 14 zugeordneten Öffnung 16, an der Tankwandung ein Stutzen oder dgl. 44 vorgesehen sein, an welchem der Deckel 42 durch einen Bajonettverschluß, eine Überwurfmutter oder sonstwie in geeigneter Weise gehalten wird. Innerhalb des Bereiches 12 des Tankes 10 ist in die Rückführleitung 36 ein Druckhalteventil 46 eingeschaltet, welches erst bei einem bestimmten Mindestdruck öffnet und sicherstellt, daß immer eine ausreichende Kraftstoffmenge durch die Leitung 34 zum Motor strömt.

Der in Strömungsrichtung hinter dem Druckhalteventil 46 befindliche Abschnitt 48 der Rückführleitung 36 ist bis dicht über den Boden 50 des Tankbereiches 12 geführt, wo er in einem horizontalen Abschnitt endet, dessen Austrittsöffnung als Treibdüse 52 einer Saugstrahlpumpe 54 ausgebildet ist, deren Fangdüse 56 sich in einen Leitungsabschnitt 58 fortsetzt, der innerhalb des Tankes 10 durch dessen Bereich 15 kleineren Querschnitts verlaufend im Reservoir 20 mündet. Die durch den rückfließenden Kraftstoffüberschuß angetriebene Saugstrahlpumpe 54 hat im wesentlichen die Funktion sicherzustellen, daß auch der im Bereich 12 des Tanks befindliche Kraftstoff zur Kraftstoffpumpe im Reservoir oder Schwalltopf 20 gelangt. Die Öffnung 40 dient somit im wesentlichen dazu, Druckhalteventil, Leitungsabschnitt 48, Saugstrahlpumpe 54 und Leitungsabschnitt 58 in den Tank hineinzubringen und dort in geeigneter Weise zu befestigen.

Außer der Rückführleitung 36 ist auch, wie im Falle des die Öffnung 16 verschließenden Deckels 24, noch eine Entlüftungsleitung 60 durch den Deckel 42 hindurchgeführt. Diese Leitung 60 dient der Entlüftung des Tankes während des Füllens desselben. Die Position der am unteren Ende der Entlüftungsleitung 60 befindlichen Öffnung 62 bestimmt das maximale Füllvolumen des Tankes. Wenn beim Befüllen des Tankes der in diesem ansteigende Kraftstoff die Eintrittsöffnung 62 der Entlüftungsleitung 60 verschließt, kann aus dem oberhalb des Kraftstoffes befindlichen Raum kein weiteres Gasgemisch mehr austreten. Durch den auf diese Weise bewirkten Druckanstieg im Tank wird der Betankungsvorgang unterbrochen, indem beispielsweise die Zapfpistole, die in die Einfüllöffnung des Tankes eingeführt ist, geschlossen wird.

Wie im Fall der durch den Deckel 24 verschlossenen Öffnung 16 besteht die Gefahr des Vorhandenseins von Undichtigkeiten für gasförmige Kohlenwasserstoffe auch hier an der Dichtungsstelle zwischen Deckel 42 und der angrenzenden Wandung des Tankes bzw. des Stutzens 44 und an den beiden Hindurchführungen durch den Deckel 42, die die Leitungen 36 und 60 betreffen.

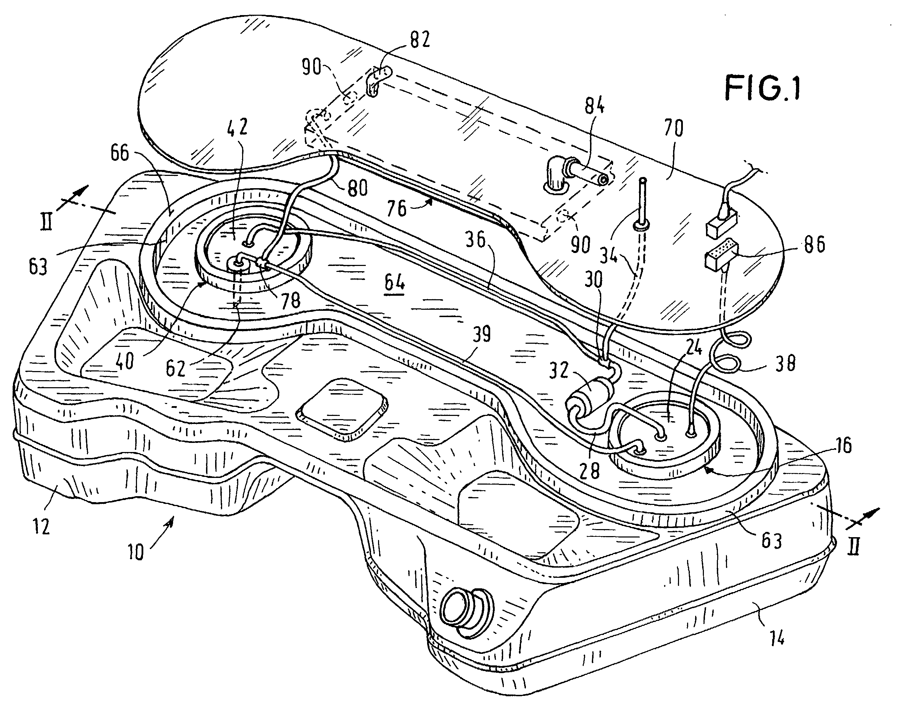

Insbesondere Fig. 1 läßt erkennen, daß der Tank 10 an seiner Oberseite, an welcher die beiden Öffnungen 16 und 40 angebracht sind, außenseitig mit einem umlaufenden leistenförmigen Vorsprung 63 versehen ist, der einen Bereich 64 begrenzt, innerhalb dessen die beiden verschließbaren Öffnungen 16, 40 und damit jene Verschlüsse, Hindurchführungen usw. angeordnet sind, bei denen die Gefahr besteht, daß gasförmige Kohlenwasserstoffe durch irgendwelche Undichtigkeiten austreten können. Bei dem in der Zeichnung dargestellten Ausführungsbeispiel ist dabei die Höhe des Vorsprungs 63, dessen oberseitige Begrenzung 66 in einer Ebene verläuft, so gewählt, daß alle Teile, die im Bereich 64 gegenüber der oberen Begrenzungswand 68 des Tankes 10 nach oben vorstehen, sich unterhalb der oberen Begrenzung 66 des leistenförmigen Vorsprungs 63 befinden. Diese Ausgestaltung gibt die Möglichkeit, den an den Seiten vom leistenförmigen Vorsprung 63 begrenzten Raum, der unterseitig durch die Tankwandung 68 begrenzt wird, durch eine plane, plattenförmige Abdeckung 70 zu verschließen, deren Form dem Grundriß des von dem leistenförmigen Vorsprung 63 begrenzten Bereiches 64 entspricht derart, daß der Randbereich der plattenförmigen Abdeckung 70 auf der oberen Begrenzung, also der Stirnfläche 66 des Vorsprunges 63, aufliegt.

Fig. 3 zeigt die Abdeckung 70 in ihrer Betriebslage, in welcher sie mittels Schweißen mit dem Vorsprung verbunden ist. Vorsprung 63 und Abdeckung 70 begrenzen somit einen Raum oder eine Kammer 74, der bzw. die, abgesehen von wenigen noch zu beschreibenden Durchgängen durch die Platte 70, gegenüber der Umgebung gasdicht abgeschlossen ist. In diesem Raum 74 sind, abgesehen von den beiden jeweils durch einen Deckel verschlossenen Öffnungen 16 und 40 und den Hindurchführungen durch den jeweiligen Deckel 24, auch der Kraftstoff-Filter 32 und die T-Stücke 30 und 78 angeordnet, so daß die zugehörigen Verbindungen und Anschlüsse sich ebenfalls innerhalb des Raumes 74 befinden.

Selbstverständlich ist es zweckmäßig, die Abdeckung 70 aus einem Material herzustellen oder mit einem Material zu beschichten, welches für Kohlenwasserstoffe undurchlässig ist. Dabei bestünde ohne weiteres die Möglichkeit, gegebenenfalls den Randbereich unbeschichtet zu lassen, um so gute Voraussetzungen für eine Schweißverbindung zu schaffen, die natürlich eine entsprechende Kompatibilität beider Materialien, also dem Material des Tanks und dem Material der Abdeckung 70, erfordert.

Die Platte 70 ist unterseitig mit einem im wesentlichen rechteckigen Gehäuse 76 versehen, welches mit Aktivkohle gefüllt ist, die als Adsorbens für Kohlenwasserstoffe dient. Die vertikale Erstrecke des Gehäuses 76 ist so bemessen, daß es bei auf dem leistenförmigen Vorsprung 63 aufgesetzter Platte 70 in den abgeschirmten Raum 74 paßt und ggf. noch Platz läßt für den Durchgang der Rückführleitung 36 und der Belüftungsleitung 39, die durch den Deckel 24 der dem Tankbereich 14 zugeordneten Öffnung 16 geführt ist. Die Belüftungsleitung 39 ist während des Betriebs des Kraftfahrzeuges, also bei Entnahme von Kraftstoff aus dem Tank für den Betrieb des Motors, geöffnet, um den Tank 10 zu belüften und das Entstehen eines Unterdruckes zu vermeiden. Die Leitung 39 ist an ihrem dem Deckel 24 abgekehrten Ende an ein T-Stück 78 angeschlossen, dessen an anderer Zugang mit der Entlüftungsleitung 60 verbunden ist, die den Kraftstofftank während des Befüllens desselben entlüftet. An den Abgang des T-Stückes 78 ist eine Leitung 80 angeschlossen, deren anderes Ende in das Gehäuse 76 des Aktivkohlefilters mündet. Der Anschluß der Leitung 80 an den Aktivkohlefilter befindet sich ebenfalls innerhalb des gegenüber der Außenatmosphäre abgeschirmten Raumes 74.

Der Aktivkohlefilter ist mit zwei Ausgängen 82 und 84 versehen, von denen einer die Verbindung zur umgebenden Atmosphäre herstellt.

In die Belüftungsleitung 39 und in die Entlüftungsteilung 60 ist jeweils ein nicht dargestelltes Ventil eingeschaltet, um diese beiden Leitungen wechselweise über die Leitung 80 mit dem Aktivkohlefilter zu verbinden. Beim Befüllen des Tankes 10 ist das in der Belüftungsleitung 39 befindliche Ventil geschlossen, so daß das aus dem Tank während des Befüllungsvorganges austretende Gasgemisch über die Leitungen 60 und 80 in den Aktivkohlefilter eintritt, in welchem die in dem Gasgemisch enthaltenen Kohlenwasserstoffe adsorbiert werden. Die so gereinigte Luft gelangt durch die Leitung 84 in die Atmosphäre. Die beiden vorerwähnten Ventile mit ihren Anschlüssen können ebenfalls innerhalb des Raums 74 angeordnet sein.

Beim normalen Betrieb des Kraftfahrzeuges ist die Entlüftungsleitung 60 geschlossen, so daß durch die die Verbindung zur Atmosphäre herstellende Leitung 84 Luft in den Filter 76 und aus diesem über die Ableitung 82 als Verbrennungsluft zum Motor des Kraftfahrzeuges geführt wird. Ein Teil der durch den Filter 76 strömenden Luft wird durch die Leitungen 80 und 39 in den Tank geführt. Die das Filter durchströmende Luft desorbiert dabei die auf den Oberflächen der Aktivkohle - oder eines anderen geeigneten Adsorbens - befindlichen Kohlenwasserstoffe, die, soweit sie nicht in den Tank gelangen, im Motor verbrannt werden.

Bei Anwendung der Lehre gemäß der Erfindung ist es gegebe-nenfalls auch möglich, die Verschlüsse der beiden Öffnungen 16, 40 etwas weniger aufwendig auszugestalten, als dies bei bekannten Tanks der Fall ist, bei denen durch irgendwelche Undichtigkeiten austretende gasförmige Kohlenwasserstoffe direkt in die umgebende Atmosphäre gelangen. So können beispielsweise weniger aufwendige Dichtungen für die Abdichtung des jeweiligen Deckels gegenüber der Tankwandung verwendet werden. Entsprechendes gilt auch für die Mittel und Maßnahmen, die angewendet werden, um die Hindurchführungen durch die beiden Deckel 24 und 42 so dicht wie möglich zu machen.

Da aus den beiden Öffnungen 82 und 84 des Filters aufgrund des Vorhandenseins der Adsorbentien keine kohlenwasserstoffhaltigen Gase austreten können, sind bei Anwendung der Lehre gemäß der Erfindung nur zwei direkte Durchgänge durch die Abdeckung 70 vorhanden, nämlich einmal der zum Motor führenden Leitung 34 und zum anderen der elektrischen Leitung 38, an deren Ende sich das Teil 86 einer Steckverbindung befindet. Es liegt auf der Hand, daß durch diese beiden Durchgänge, falls sie geringfügige Undichtigkeiten aufweisen, sehr viel weniger Kohlenwasserstoffe nach außen in die Atmosphäre gelangen als die Menge, die durch die Gesamtheit der Durchgänge, Verbindungen usw., die sich innerhalb des Raumes 74 befinden, austreten kann.

Die Zeichnung läßt erkennen, daß die Anwendung der Erfindung es ermöglicht, sämtliche verschlossenen Tanköffnungen sowie sämtliche Verbindungen der Leitungen und Anschlüsse an Funktionsteile, beispielsweise am Kraftstoff-Filter 32 und Ventilen, im Raum 74 unterzubringen, welcher gegenüber der Umgebung praktisch gasdicht abgeschirmt ist.

Fig. 2 der Zeichnung läßt erkennen, daß der Vorsprung 63 als Hohlleiste ausgebildet ist und der von den beiden Schenkeln 65, 67 und dem die Schenkel verbindenden Steg 73 begrenzte Hohlraum 72 des Vorsprungs 63 mit dem Tankinnenraum in Verbindung steht. Dadurch werden, wenn die innere Oberfläche derTankwandung durch Fluorieren behandelt wird, auch die inneren Oberflächen des als Hohlleiste ausgebildeten Vorsprunges 63 fluoriert mit der Folge einer entsprechenden Herabsetzung der Durchlässigkeit dieser Wandungen für Kohlenwasserstoffe, die sich im Bereich des Raumes 74 befinden.

Wenn die Wandung des Tanks aus mehreren Schichten besteht, von denen wenigstens eine als Barriereschicht ausgebildet ist, würde der Vorsprung ebenfalls undurchlässig für Kohlenwasserstoffe sein, und zwar auch dann, wenn der Vorsprung nicht hohl, sondern massiv ausgebildet wäre. Der die obere Begrenzung 66 des Vorsprunges 63 bildende Steg 73 weist in jedem Fall eine derartige Erstreckung senkrecht zu den beiden Schenkeln 65, 67 auf, daß eine hier ggf. fehlende Diffusionssperre nicht ins Gewicht fiele. Tanksystem gemäß der Erfindung sind somit nur noch zwei Durc hgänge, nämlich der für die Kraftstoffzuleitung 34 und der für die elektrische Leitung 38 erforderlich, an denen nur minimale Undichtigkeiten auftreten können.

Abweichend von dem in der Zeichnung dargestellten Ausführungsbeispiel kann die Anordnung auch so getroffen sein, daß die Abdeckplatte 70 profiliert ist derart, daß sie beispielsweise an Stellen, an denen irgendwelche Bauteile oder dgl. nach oben über die obere Stirnseite 66 des leistenförmigen Vorsprunges vorstehen, mit einer entsprechenden Ausbuchtung in Form einer Volumenvergrößerung des Raumes 74 versehen ist. Es ist aber auch möglich, den Raum 74, der durch eine Abdeckung gegenüber der Umgebung abgeschirmt wird, in einer Einziehung des Tankes anzuordnen, so daß der Raum 74 nicht oder nur in Teilen gegenüber der äußeren Kontur des Tankes 10 vorsteht. Welche der sich anbietenden vielen Möglichkeiten benutzt wird, hängt im wesentlichen ab von der Konfiguration des Tankes und dem am Ort des Einbaus im Kraftfahrzeug zur Verfügung stehenden Raum.

Im übrigen ist es zweckmäßig, das das Adsorbens aufnehmende Gehäuse 76 mit kleinen Löchern 90 oder dgl. zu versehen, durch die ein Druckausgleich zwischen dem Inneren des Gehäuses und dem umgebenden Raum 74 stattfindet. Dies führt zu einem gewissen Austausch zwischen den Gasen in den das Gehäuse 76 umgebenden Bereichen des Raumes 74 und dem Filter mit der Folge, daß die im Raum 74 sich sammelnden Kohlenwasserstoffe jedenfalls soweit durch das Adsorbens im Filter adsorbiert werden, daß das Entstehen einer Konzentration an Kohlenwasserstoffen im Raum 74 vermieden wird, so daß praktisch selbst dann keine Kohlenwasserstoffe nach außen gelangen könnten, wenn Abdeckung 70 und leistenförmiger Vorsprung 63, der die Seitenwand des Raumes 74 darstellt, nicht für Kohlenwasserstoffe undurchlässig wären.

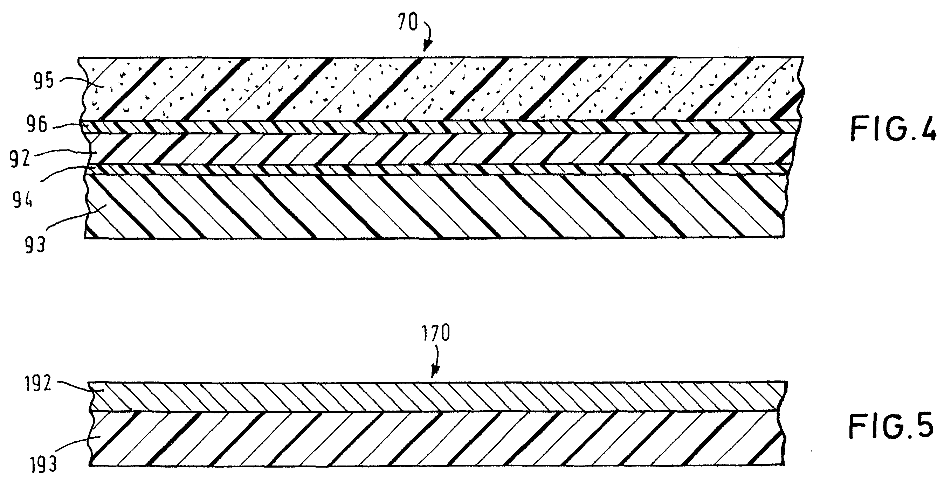

Fig. 4 zeigt einen Schnitt durch eine Abdeckplatte 70, die als Laminat ausgebildet ist und aus mehreren Schichten besteht, von denen die mittlere Schicht 92 als Barriereschicht ausgebildet ist, die keine oder nur eine sehr geringe Durchlässigkeit für Kohlenwasserstoffe aufweist. Die mit dem Vorsprung 63 zu verbindende Seite wird durch eine Schicht aus HDPE 93 gebildet. Aus diesem Material ist im allgemeinen auch der Tank hergestellt, so daß die Abdeckplatte 70 mit der Stirnfläche 66 des Vorsprungs 63 ohne weiteres verschweißt werden kann, um eine dichte Verbindung herzustellen. Die Barriereschicht 92 ist über eine Haftvermittlerschicht 94 mit der HDPE-Schicht 93 verbunden. Die obere Schicht 95 kann aus zurückgeführtem Abfallmaterial bestehen, das die Materialien sämtlicher Schichten der Abdeckplatte 70 aufweist. Die Schicht 95 ist über eine zweite Haftvermittlerschicht 96 mit der Barriereschicht 92 verbunden. Selbstverständlich ist es möglich, anstelle des Abfallmaterials für die Schicht 95 ebenfalls HDPE zu verwenden. Das die Abdeckplatte 70 bildende Laminat kann denselben Aufbau aufweisen wie die Wandung des Tankes 10, wenngleich dies nicht erforderlich ist.

Fig. 5 zeigt eine zweite Ausführungsform einer Abdeckplatte 170, die aus einer Kunststoffschicht 193 besteht, die oberseitig mit einer für Kohlenwasserstoffe undurchlässigen Metallfolie 192 kaschiert ist. Letztere kann aus Aluminium bestehen. Auch hier kann die Verbindung zwischen Abdeckplatte 170 und dem Vorsprung 63 durch Schweißen erfolgen, wenn die Materialien des Vorsprunges 63 einerseits und der Schicht 193 andererseits kompatibel sind. In den Fig. 4 und 5 ist die Dicke der Schichten bzw. der Folie nicht maßstabsgerecht dargestellt.

## Patentansprüche

1. Tanksystem für ein Kraftfahrzeug, das mit wenigstens einem Kraftstofftank (10), wenigstens einem Anschluss und/oder wenigstens einer Verbindungsleitung und wenigstens einer in der Tankwandung angebrachten Öffnung (16,40) die durch ein Verschlussmittel (24, 42) verschlossen ist, wobei an mindestens einem Bereich des Tanks (10) außenseitig wenigstens eine Abdeckung angebracht ist, die mit der Tankwandung einen gegenüber der Umgebung abgeschirmten Raum (74) begrenzt, **dadurch gekennzeichnet, dass** innerhalb des abgeschirmten Raums wenigstens die durch ein Verschlussmittel (24,42) verschlossene Öffnung und wenigstens eine Hindurchführung durch die Tankwandung angeordnet sind oder wenigstens die durch ein Verschlussmittel (24,42) verschlossene Öffnung mit wenigstens einer Hindurchführung durch das Verschlussmittel angeordnet ist und dass die Abdeckung mit der Tankwandung gasdicht verschweißt ist.

2. Tanksystem nach Anspruch 1, **dadurch gekennzeichnet, daß** der wenigstens eine abgeschirmte Raum durch wenigstens eine Einziehung in der Tankwandung gebildet ist, die durch wenigstens eine Abdeckung verschlossen ist.

3. Tanksystem nach Anspruch 1, **dadurch gekennzeichnet, daß** der wenigstens eine abgeschirmte Raum (74) durch einen äußeren Vorsprung (63) der Tankwandung und wenigstens einer Abdeckung (70) gebildet ist, die den vom Vorsprung (63) begrenzten Bereich abdeckt.

4. Tanksystem nach Anspruch 2, **dadurch gekennzeichnet, daß** die Abdeckung als im wesentlichen ebene Platte ausgebildet ist, die im wesentlichen mit den an die Einziehung anschließenden Bereiche der Tankwandung fluchtet.

5. Tanksystem nach Anspruch 1, **dadurch gekennzeichnet, daß** der abgeschirmte Raum durch einen Hohlkörper gebildet wird, welcher außen auf die Tankwandung aufgesetzt ist.

6. Tanksystem nach Anspruch 5, **dadurch gekennzeichnet, daß** die Abdeckung als eine mit der Tankwandung verbundene Kappe ausgebildet ist, die zumindest teilweise gegenüber der Tankwandung nach außen vorsteht.

7. Tanksystem nach Anspruch 5, **dadurch gekennzeichnet, daß** der Hohlkörper wenigstens teilweise von einer in der Tankwandung befindlichen Ausnehmung aufgenommen ist.

8. Tanksystem nach Anspruch 1, **dadurch gekennzeichnet, daß** die Abdeckung zur Erzielung einer ausreichenden Steifigkeit profiliert ist.

9. Tanksystem nach Anspruch 1, **dadurch gekennzeichnet, daß** sie mit wenigstens einem Kohlenwasserstoffe adsorbierenden Filter versehen ist.

10. Tanksystem nach Anspruch 9, **dadurch gekennzeichnet, daß** wenigstens ein Filter innerhalb des abgeschirmten Raumes angeordnet ist.

11. Tanksystem nach Anspruch 9, **dadurch gekennzeichnet, daß** das Filtermaterial innerhalb eines Gehäuses (76) angeordnet ist, das mit der Abdeckung (70) verbunden ist.

12. Tanksystem nach Anspruch 9, **dadurch gekennzeichnet, daß** das Filtermaterial innerhalb eines Gehäuses angeordnet ist, das Teil der Abdeckung bildet.

13. Tanksystem nach Anspruch 1, **dadurch gekennzeichnet, daß** zumindest ein Teil des abgeschirmten Raumes mit Filtermaterial gefüllt ist, welches der Adsorption von Kohlenwasserstoffen dient.

14. Tanksystem nach einem der vorhergehenden Ansprüche, **dadurch gekennzeichnet, daß** der abgeschirmte Raum belüftet ist und das aus dem Raum abgeführte Gasgemisch durch einen die Kohlenwasserstoffe dieses Gemisches zumindest teilweise adsorbierenden Filter geführt wird.

15. Tanksystem nach einem der vorhergehenden Ansprüche, **dadurch gekennzeichnet, daß** der Tank aus thermoplastischem Kunststoff im Extrusions-Blasverfahren hergestellt ist.

16. Tanksystem nach Anspruch 1, **dadurch gekennzeichnet, daß** die Abdeckung (70, 170) für Kohlenwasserstoffe weitgehend diffusionsdicht ist.

17. Tanksystem nach Anspruch 16, **dadurch gekennzeichnet, daß** die Abdeckung (70, 170) mehrschichtig ausgebildet ist, wobei eine dieser Schichten (92, 192) für Kohlenwasserstoffe zumindest weitgehend undurchlässig ist.

18. Tanksystem nach Anspruch 16, **dadurch gekennzeichnet, daß** die Abdeckung (170) mit einer Folie (192) aus für Kohlenwasserstoffe undurchlässigem Material versehen ist.

19. Tanksystem nach Anspruch 3, **dadurch gekennzeichnet, daß** der Vorsprung (63) für Kohlenwasserstoffe undurchlässig ist.

## Claims

1. A tank system for a motor vehicle which is provided with at least one fuel tank (10), at least one connection and/or at least one connecting conduit and at least one opening (16, 40) which is provided in the tank wall and which is closed by a closure means (24, 42), wherein provided on the outside at at least one region of the tank (10) is at least one cover which with the tank wall delimits a space (74) which is screened with respect to the ambient atmosphere, **characterised in that** arranged within the screened space are at least the opening closed by a closure means (24, 42) and at least one passage means through the tank wall or at least the opening closed by a closure means (24, 42) with at least one passage means through the closure means and that the cover is gas-tightly welded to the tank wall.

2. A tank system according to claim 1 **characterised in that** the at least one screened space is formed by at least one recess in the tank wall, said recess being closed by at least one cover.

3. A tank system according to claim 1 **characterised in that** the at least one screened space (74) is formed by an external projection (63) on the tank wall and at least one cover (70) which covers the region defined by the projection (63).

4. A tank system according to claim 2 **characterised in that** the cover is in the form of a substantially flat plate which is substantially aligned with the regions of the tank wall adjoining the recess.

5. A tank system according to claim 1 **characterised in that** the screened space is formed by a hollow body which is fitted externally on to the tank wall.

6. A tank system according to claim 5 **characterised in that** the cover
is in the form of a cap which is connected to the tank wall and which at least partially projects outwardly with respect to the tank wall.

7. A tank system according to claim 5 **characterised in that** the hollow body is at least partially received by an opening in the tank wall.

8. A tank system according to claim 1 **characterised in that** the cover is profiled to achieve adequate stiffness.

9. A tank system according to claim 1 **characterised in that** it is provided with at least one filter for adsorbing hydrocarbons.

10. A tank system according to claim 9 **characterised in that** at least one filter is arranged within the screened space.

11. A tank system according to claim 9 **characterised in that** the filter material is arranged within a housing (76) connected to the cover (70).

12. A tank system according to claim 9 **characterised in that** the filter material is arranged within a housing which forms part of the cover.

13. A tank system according to claim 1 **characterised in that** at least a portion of the screened space is filled with filter material which serves for the adsorption of hydrocarbons.

14. A tank system according to one of the preceding claims **characterised in that** the screened space is vented and the gas mixture discharged from the space is passed through a filter at least partially adsorbing the hydrocarbons of said mixture.

15. A tank system according to one of the preceding claims **characterised in that** the tank is produced from thermoplastic material by an extrusion blow-moulding process.

16. A tank system according to claim 1 **characterised in that** the cover (70, 170) is substantially diffusion-resistant to hydrocarbons.

17. A tank system according to claim 16 **characterised in that** the cover (70, 170) comprises a plurality of layers, one of said layers (92, 192) being at least substantially impermeable to hydrocarbons.

18. A tank system according to claim 16 **characterised in that** the cover (170) is provided with a film (192) of material which is impermeable to hydrocarbons.

19. A tank system according to claim 3 **characterised in that** the projection (63) is impermeable to hydrocarbons.

## Revendications

1. Système de réservoir pour un véhicule à moteur, qui comprend au moins un réservoir de carburant (10), au moins un raccord et / ou au moins une conduite de liaison et au moins une ouverture (16, 40), pratiquée dans la paroi du réservoir, qui est fermée par un moyen d'obturation (24, 42), moyennant quoi, en au moins une zone du réservoir (10), au moins un recouvrement est placé à l'extérieur, recouvrement qui limite avec la paroi du réservoir un espace (74) protégé par rapport à l'environnement, **caractérisé en ce qu'**à l'intérieur de l'espace protégé sont disposées au moins l'ouverture fermée par un moyen d'obturation (24, 42), et au moins une traversée à travers la paroi du réservoir, où est disposée au moins l'ouverture fermée par un moyen d'obturation (24, 42), avec au moins une traversée à travers le moyen d'obturation, et **en ce que** le recouvrement est soudé de manière étanche aux gaz à la paroi du réservoir.

2. Système de réservoir selon la revendication 1, **caractérisé en ce que** le au moins un espace protégé est formé par au moins un retrait dans la paroi du réservoir, qui est fermé par au moins un recouvrement.

3. Système de réservoir selon la revendication 1, **caractérisé en ce que** le au moins un espace protégé (74) est formé par une saillie extérieure (63) de la paroi du réservoir et par au moins un recouvrement (70), qui recouvre la zone limitée par la saillie (63).

4. Système de réservoir selon la revendication 2, **caractérisé en ce que** le recouvrement est configuré comme plaque essentiellement plane, qui est essentiellement coplanaire avec les zones de la paroi du réservoir adjacentes au retrait.

5. Système de réservoir selon la revendication 1, **caractérisé en ce que** l'espace protégé est formé par un corps creux qui est appliqué à l'extérieur sur la paroi du réservoir.

6. Système de réservoir selon la revendication 5, **caractérisé en ce que** le recouvrement est configuré comme un capuchon relié à la paroi du réservoir, capuchon qui saille au moins en partie vers l'extérieur par rapport à la paroi du réservoir.

7. Système de réservoir selon la revendication 5, **caractérisé en ce que** le corps creux est accueilli au moins en partie par un évidement se trouvant dans la paroi du réservoir.

8. Système de réservoir selon la revendication 1, **caractérisé en ce que** le recouvrement est profilé pour l'obtention d'une rigidité suffisante.

9. Système de réservoir selon la revendication 1, **caractérisé en ce qu'**il est doté d'au moins un filtre adsorbant les hydrocarbures.

10. Système de réservoir selon la revendication 9, **caractérisé en ce qu'**au moins un filtre est disposé à l'intérieur de l'espace protégé.

11. Système de réservoir selon la revendication 9, **caractérisé en ce que** le matériau du filtre est disposé à l'intérieur d'un boîtier (76), qui est relié au recouvrement (70).

12. Système de réservoir selon la revendication 9, **caractérisé en ce que** le matériau du filtre est disposé à l'intérieur d'un boîtier qui forme une partie du recouvrement.

13. Système de réservoir selon la revendication 1, **caractérisé en ce qu'**au moins une partie de l'espace protégé est remplie du matériau du filtre qui sert à l'adsorption des hydrocarbures.

14. Système de réservoir selon l'une quelconque des revendications précédentes, **caractérisé en ce que** l'espace protégé est ventilé et **en ce que** le mélange de gaz évacué de l'espace est acheminé à travers un filtre qui adsorbe au moins en partie les hydrocarbures de ce mélange.

15. Système de réservoir selon l'une quelconque des revendications précédentes, **caractérisé en ce que** le réservoir est fabriqué en une matière synthétique thermoplastique selon un procédé par extrusion et soufflage.

16. Système de réservoir selon la revendication 1, **caractérisé en ce que** le recouvrement (70, 170) est étanche dans une large mesure vis-à-vis de la diffusion des hydrocarbures.

17. Système de réservoir selon la revendication 16, **caractérisé en ce que** le recouvrement (70, 170) est configuré en plusieurs couches, moyennant quoi l'une de ces couches (92, 192) est au moins dans une large mesure étanche aux hydrocarbures.

18. Système de réservoir selon la revendication 16, **caractérisé en ce que** le recouvrement (170) est doté d'un film (192) en un matériau imperméable aux hydrocarbures.

19. Système de réservoir selon la revendication 3, **caractérisé en ce que** la saillie (63) est imperméable aux hydrocarbures.
